# EUROPEAN PATENT APPLICATION

(11) **EP 1 164 721 A2**
(43) Date of publication of application: **19.12.2001**
(21) Application number: 01304989.5
(22) Date of filing: 07.06.2001
(51) Int. Cl.: H04B 7/26

(54) **Digital enhanced cordless telecommunication system synchronisation**

(30) Priority: 15.06.2000 GB 0014480
(71) Applicant: Pace Micro Technology Ltd, Saltaire, Shipley BD18 3LF (GB)
(72) Inventor: Johnson, Graham, Leeds, LS20 8JR (GB)
(74) Representative: Wood, Graham

(57) **Abstract**

The invention relates to the provision of a means for preventing interference and the occurrence of "sliding collisions" when two or more DECT communication systems are used in relatively close proximity. The invention provides for the connection of the DECT systems to a data communication network along which a timing reference signal is carried such that the DECT systems connected to the network are synchronised. In one embodiment further steps can be taken to adapt the timing reference signal to take into account changes in the distance from the respective DECT systems to the data communication system head end at which the timing reference is generated.

## Description

The invention to which this application relates is to an improvement for use in a digital enhanced cordless telecommunication (DECT) system. This system is becoming increasingly prevalent throughout the world as a standard form of telecommunication.

The use of DECT systems allows the use of cordless telephone handsets in the vicinity of a base station. The base station is connected to the telecommunications network and allows the sending and reception of telephone calls. The cordless handsets can be moved around and away from the base station within a given area and receive and send data to the base stations which is representative of incoming and outgoing calls respectively. The digital enhancement of the data means that the quality of the calls received and made are improved and the cordless transmission system is generally more resilient than conventional telecommunication systems which include cordless connections.

However, a problem which has been experienced with the DECT systems is that if there are provided a number of systems in proximity so that if, for example, there are a number of base stations within a large premises or within adjacent premises, they may suffer interference which adversely affects the operation of the same. This interference is known as "sliding collisions" and can be due to the fact that the respective systems are not synchronised in the time-domain. This interference can reduce the data throughput of each system and, in extreme circumstances, can lead to loss of service.

There are currently 2 existing known systems whereby DECT base stations can be synchronised to avoid sliding collisions. One system is to provide a physical wire connection between the adjacent base stations and this requires the units to be physically close together and capable of being inter-connected. One unit acts as a master and outputs a timing reference to one or more (daisy-chained) slaves. This however is not possible in neighbouring systems between two unrelated locations, such as for example, systems in two different premises. The second system is to use a timing reference which is obtained from a GSM telecommunication system. This removes the requirement to have the base units physically linked, but has the disadvantage of adding an expensive GSM receiver to each DECT station.

It is obviously desirable for the loss of service to be avoided.

In many cases premises are provided with broadcast data receivers which are connected to a television or display screen and speakers to allow the generation of audio, video and auxiliary data to be viewed and/or listened to by a user in the premises. The recievers are provided for the reception of data which is broadcast from a remote location from a broadcaster and other service providers. The data is then transmitted from the head end or remote location via a data communications network system to which the receivers can be connected at their respective locations. One known transmission system is provided by a cable transmission network in which the data is carried to large numbers of broadcast data receivers in different premises along a cable network.

In addition, the broadcast data receivers can be connected to other apparatus such as telecommunication apparatus such as DECT systems and the same use telecommunication services provided by the cable network. Typically the broadcast data receivers include a modem to allow the communication of data to and from the communications network.

The aim of the present invention is to overcome the problems experienced with adjacent DECT systems by synchronising the adjacent apparatus so as to prevent the sliding collisions effect from occurring and to do so in a cost effective and practical manner.

In a first aspect of the invention there is provided a DECT system comprising a base station and at least one handset therefore, said system connected to a data communication network system including a telecommunications service and characterised in that the connection is via a broadcast data receiver connected to the data communication network system for the reception of data therefrom and, at the broadcast location or head end, of the data network system, a timing reference is generated and transmitted via the data communication network system and received and referred to by the DECT system base station via the broadcast data receiver.

Typically a number of base stations are connected to the cable network system, in the same premises or in different premises but in whatever format each base station will receive the same timing reference transmitted by the cable network head end and will therefore be time synchronised with respect each other.

The transmission and reception of the same timing reference means that all DECT systems connected to the cable network system which are in close proximity and which would normally be susceptible to the sliding collisions, are time synchronised and therefore no longer suffer from the problem caused by neighbouring systems.

In one embodiment, the return channel ranging capabilities of the cable network system broadcast data receiver can be used to compensate for differing cable lengths between the multitude of expanders distributed on the network. A timing multiframe signal can be carried in-band or alternatively on an out-of-band carrier along the cable network system from the head end to the various broadcast data receivers connected thereto.

In a further aspect of the invention there is provided a communication system including a DECT system comprising a base station and at least one handset therefore and a data communications network system connected to a premises and characterised in that the DECT system is connected to the data communication network system to receive a timing reference generated and transmitted along the data communication network system.

Typically the data communication network system is connected at a number of premises and at at least some of said premises are connected a DECT system, each of which refers to the same timing reference carried via the cable communications network system.

The data communication network system is typically a cable communication network system.

A specific embodiment of the invention will now be described with reference to the accompanying diagram which illustrates in schematic fashion a cable communication network system and several DECT systems connected thereto at three different premises Home 1, Home 2 and Home 3 (hereinafter referred to as the premises 4)

With the cable network system, a number of broadcast data receivers 2 are connected thereto in each of the premises 4. Part of the cable network aim is to include a telecommunications service and hence many DECT systems 6 are connected to the cable network system via the broadcast data receivers 2 as shown. When a number of DECT systems are provided in close proximity either in the same premises or in adjacent premises such as with premises 4', 4" the performance of the same can be affected due to sliding collisions due to the lack of time synchronisation.

A typical Hybrid-fibre coaxial (HFC) Network is shown which originates at the Network Head end 12 and includes a number of hubs 20 from which a series of branches can originate and for simplicity only one such branch is shown emanating from one of the hubs. This branch then connects to nodes 8, subsequently sub nodes 14, followed by block nodes 16 from which connections to individual premises are made. Thus the cable communications network system use this tree-and-branch topology transmission network to allow the connection of numerous broadcast data receivers to the network for the reception of common data and the provision of common services. The Network Head end 12 serves as a central location for services offered over the HFC Network and from which location the data for the services is transmitted.

In the cable communication network system the common base of the head end is shared by all the broadcast data receivers and, in turn, DECT systems deployed on the network.

The use of the communication network system using the Hybrid-fibre coaxial technology involves the transmission of data for some distance over fibre-optic links from the hub to the node 8. The fibre optic links are then terminated by the fibre-node 8 which converts the optical signals 10' to electrical signals 10" for subsequent transmission to the sub and block nodes over a conventional coaxial cable network for use by the apparatus 2, 6 in the subscribers' premises 4.

Thus, in accordance with the invention, rather than delivering a timing reference signal wirelessly via GSM or physically connecting DECT systems via wire connection, a master signal which includes a timing reference is generated at the head-end 12 of the cable network system and transmitted along and throughout the network 10 for reception by the broadcast data receivers and DECT systems 6.

With the timing reference signal generated the same can be used to allow synchronisation of the DECT systems 6 connected to the network. The synchronisation can be achieved on (at least) 2 levels.

A first level is to allow time synchronisation only, by using the head-end timing reference signal with no individual offset for each DECT system. This is the 'simplest' of the two systems and is applicable to adjacent DECT systems. The assumption is made that if the said DECT systems are sufficiently close so as to mutually interfere so that the sliding collisions occur, then they will also be sufficiently close such that they will be, in broad terms, an equal "distance" away from the head-end of the cable network system from which the timing reference signal has been generated. This therefore means that any path delay in the timing reference signal caused by the same travelling through the cable network system to each of two DECT systems will be sufficiently similar such that no significant difference in phase has occurred in the timing reference signal and for this reason any actual differences can be ignored. In practical terms this system will be sufficient to prevent the sliding collisions in many cases.

The second system involves the provision of both time and phase synchronisation. In this case and with the same system as described in the preceding paragraph, the assumption of no difference in phase between respective DECT systems is not made. In this system the head-end time reference signal is again used but with individual offset adjustments for each DECT system. The offset adjustment is made to take into account phase differences in the network and is performed using the 'ranging' mechanism which is embedded within the Data Over Cable Service Interface Specification (DOCSIS) specification and included in the broadcast data receiver through which each of the DECT systems is connected to the cable systems network in this embodiment.

The distance from each DECT system modem to the network head end 12 will vary from modem to modem, but there is a need to time-co-ordinate Time Division Multiple Access (TDMA) transmissions from these modems of the DECT systems 6 as they share a common upstream bandwidth for return path communications. Ranging is the process by which a cable modem of the broadcast data receivers 2 can derive the network propagation delay and thus calculate the distance from the head end. It can then essentially synchronise with other modems on the network by adjusting timing delays.

Ranging first occurs when a cable modem is registered to the network (hooked-up), however ranging is a continual process, due to the expanding and contracting of the cable that occurs during the day with respect to environmental conditions.

The ranging process involves the cable modem sending a range request message to the head end and then the head end returning a range response message indicating the propagation delay.

The use of the ranging mechanism afforded by the inclusion of a DOCSIS modem allows propagation delays through the cable system network to individual units to be determined. Adjustments within the broadcast data receiver can then be applied to ensure the DECT system connected thereto is brought into-phase with all others.

While this system is more complex and hence potentially more costly than the first system it ensures that units in close physical proximity that are connected onto the cable network system by widely diverse paths and where phase differences may exist, can be synchronised correctly.

The timing reference signal can be carried in-band over the DOCSIS downstream channel or in-band over an Moving Picture Experts Group MPEG stream. Alternatively it could be carried out-of-band say in a Digicipher system. In an MPEG stream it would operate similar to the PCR timing signal and in a DOCSIS system the ranging mechanism can be used.

Thus the systems as herein described represents an efficient and effective way of minimising or removing the problems of DECT systems being out of synchronisation and the interference and/or loss of service which this can cause and although specifically described with reference to a cable network can also be utilised in other forms of communication networks to which DECT systems are attached.

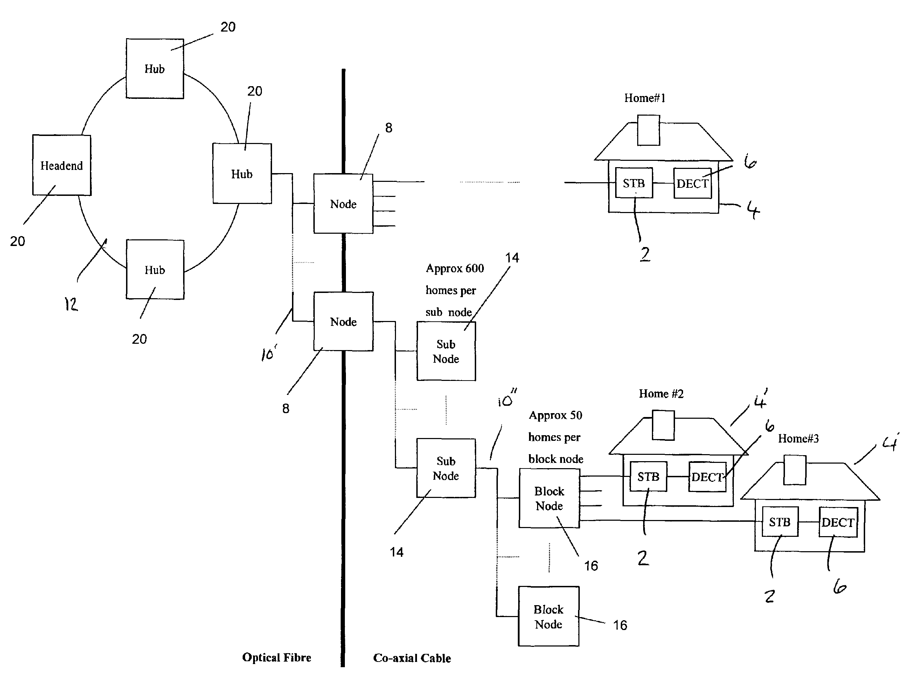

## Claims

1. A DECT system comprising a base station and at least one handset therefore, said system connected to a data communication network system including a telecommunications service and **characterised in that** the connection is via a broadcast data receiver connected to the data communication network system for the reception of data therefrom and at the broadcast location or head end of the cable network system, a timing reference is generated and transmitted via the data communication network system and received and referred to by the DECT system base station via the broadcast data receiver.

2. A system according to claim 1 **characterised in that** a number of base stations are connected to the data communications network system and each base station receives the same timing reference transmitted by the cable network head end.

3. A system according to claim 2 **characterised in that** each of the said base stations are time synchronised.

4. A system according to claim 1 **characterised in that** the return channel ranging capabilities of the broadcast data receiver is used to compensate for differing distances between each of a plurality of broadcast data receivers connected to the data communication network.

5. A system according to claim 1 **characterised in that** the timing signal is carried in an in-band carrier along the data communication network system from the head end to the various broadcast data receivers connected thereto.

6. A system according to claim 1 **characterised in that** the timing signal is carried in an out-of-band carrier along the data communication network system from the head end to the various broadcast data receivers connected thereto.

7. A system according to claim 1 **characterised in that** the data communication network system is a cable communication network system.

8. A communication system including a DECT system comprising a base station and at least one handset therefore and a data communications network system connected to a premises and **characterised in that** the DECT system is connected to the data communication network system to receive a timing reference generated and transmitted along the data communication network system.

9. A communication system according to claim 8 **characterised in that** the data communication network system is connected at a number of premises and at at least some of said premises a DECT system is connected thereto, each of which refers to the same timing reference carried via the cable communications network system.
